# DEMANDE DE BREVET EUROPEEN

(11) **EP 0 949 121 A1**
(43) Date de publication de la demande: **13.10.1999**
(21) Numéro de dépôt: 99400871.2
(22) Date de dépôt: 09.04.1999
(51) Int. Cl.: B60R 13/04

(54) **Dispositif de montage d'un profilé de garniture sur une carrosserie de véhicule automobile**

(30) Priorité: 10.04.1998 FR 9804545
(71) Demandeur: STANDARD PRODUCTS INDUSTRIEL, F-95871 Bezons (FR)
(72) Inventeur: Duchet, Thierry, 95520 Osny (FR); Gras, Robert, 80290 Poix de Picardie (FR); Gaudry, Thierry, 75005 Paris (FR)
(74) Mandataire: Busnel, Jean-Benoît

(57) **Abrégé**

L'invention concerne le dispositif de montage d'un profilé de garniture (1) sur une tôle (T) de carrosserie, caractérisé en ce que la face dorsale (1b) dudit profilé (1) est pourvue d'une semelle (2) portant des ergots (20) de retenue destinés à coopérer par appui transversal et translation longitudinale avec des orifices (V) de verrouillage ménagés dans la carrosserie pour venir se bloquer contre la face interne de la tôle (T) et des nervures latérales (21,22) élastiquement déformables destinées à venir conjointement en compression sur la face externe de la tôle (T).

## Description

La présente invention concerne un dispositif de montage d'un profilé de garniture sur une carrosserie de véhicule automobile.

Les profilés de garniture auxquels s'applique l'invention sont plus particulièrement constitués de baguettes formant enjoliveurs qui sont réalisées par extrusion ou moulage par injection de matières thermoplastiques.

Ces profilés sont jusqu'à présent montés sur tôle du véhicule et notamment sur les parties latérales de la carrosserie au moyen d'agrafes ou d'adhésif double-face.

Cependant, ces modes de montage ne sont pas suffisamment fiables car ils mettent en oeuvre des pièces indépendantes (agrafes, ruban, adhésif...) dont la solidarisation, d'une part, avec le profilé et, d'autre part avec la tôle de carrosserie, n'est pas toujours assurée et maintenue de façon mécaniquement résistante.

Par ailleurs, les dispositifs de montage connus ne permettent pas d'obtenir une stabilité dimensionnelle ni un ajustement de la rigidité du profilé en fonction du galbe longitudinal de la carrosserie.

Au surplus, l'étanchéité et l'isolation résultant des montages traditionnels n'atteignent pas des niveaux suffisamment élevés compte tenu des exigences des constructeurs automobiles en la matière.

La présente invention a pour but de résoudre ces problèmes techniques.

Cet objectif est atteint de manière satisfaisante, et conformément à l'invention au moyen d'un dispositif de montage d'un profilé de garniture sur une tôle de carrosserie, caractérisé en ce que la face dorsale dudit profilé est pourvue d'une semelle portant des ergots de retenue destinés à coopérer par appui transversal et translation longitudinale avec des orifices de verrouillage ménagés dans la carrosserie pour venir se bloquer contre la face interne de la tôle et des nervures latérales élastiquement déformables destinées à venir conjointement en compression sur la face externe de la tôle.

Selon une caractéristique avantageuse, lesdits ergots de retenue sont constitués d'un pied rattaché à la semelle et se prolongeant par une tête élargie.

Selon une autre caractéristique, l'extrémité de la tête élargie a un profil curviligne assurant son guidage dans les orifices de verrouillage lors du montage.

Selon une autre caractéristique, lesdits orifices de verrouillage sont constitués d'un évidement dont les contours et les dimensions permettent le passage d'un ergot, et qui se prolonge longitudinalement par une saignée dont les dimensions permettent le coulissement dudit ergot tout en assurant son blocage transversal.

Selon un mode de réalisation spécifique, la tôle de carrosserie est pourvue d'au moins un orifice de positionnement dont les contours et les dimensions permettent l'introduction et le calage d'un ergot et dont la position est décalée longitudinalement vers l'orifice de verrouillage adjacent.

Par ailleurs, il est prévu que le profilé de l'invention soit réalisé avec une matière thermoplastique dont la dureté est comprise entre 60 et 90 shore A. Ladite semelle est réalisée quant à elle avec une matière thermoplastique partiellement rigide dont la dureté est supérieure à 98 shore A, tandis que la dureté des nervures est comprise entre 60 et 75 shore A.

Selon un premier mode de réalisation, la semelle et le profilé sont réalisés sous forme de deux pièces indépendantes rendues solidaires l'une de l'autre.

Dans ce cas, la face dorsale du profilé est pourvue d'une gorge longitudinale dans laquelle est fixée ladite semelle.

Selon une variante particulière, les parois de ladite gorge sont inclinées pour définir une section trapézoïdale.

Selon une autre variante, la semelle a une section transversale en U inversé ; les deux branches latérales assurant l'ancrage dans ledit profilé.

Selon un second mode de réalisation, la semelle et le profilé sont réalisés d'une seule pièce par coextrusion ou moulage.

Le dispositif de l'invention peut s'appliquer de façon efficace tant aux profilés réalisés par extrusion que par moulage et sa mise en oeuvre particulièrement simple peut être facilement automatisée.

Le montage obtenu offre une tenue très résistante du profilé sur la carrosserie ainsi qu'une bonne étanchéité vis-à-vis des infiltrations d'eau et une excellente isolation phonique.

En effet, la synergie entre les nervures amortissantes à effet ressort et les ergots de retenue assure un placage de la tête des ergots contre la face interne de la tôle de carrosserie, ce qui supprime les risques de vibration et de déplacements parasites.

L'invention sera mieux comprise à la lecture de la description suivante en référence aux dessins annexés sur lesquels :
- la figure 1 représente une vue en perspective d'un mode de réalisation du dispositif de l'invention avant assemblage;
- la figure 2 représente une vue en coupe transversale de la semelle utilisée dans le mode de réalisation de la figure 1;
- la figure 3 représente une vue en perspective d'une variante de réalisation du dispositif de l'invention;
- les figures 4 et 5 représentent les phases successives de l'application du mode de réalisation de la figure 1 à une carrosserie ;
- la figure 6 représente une vue en coupe transversale du dispositif de l'invention après montage du profilé.

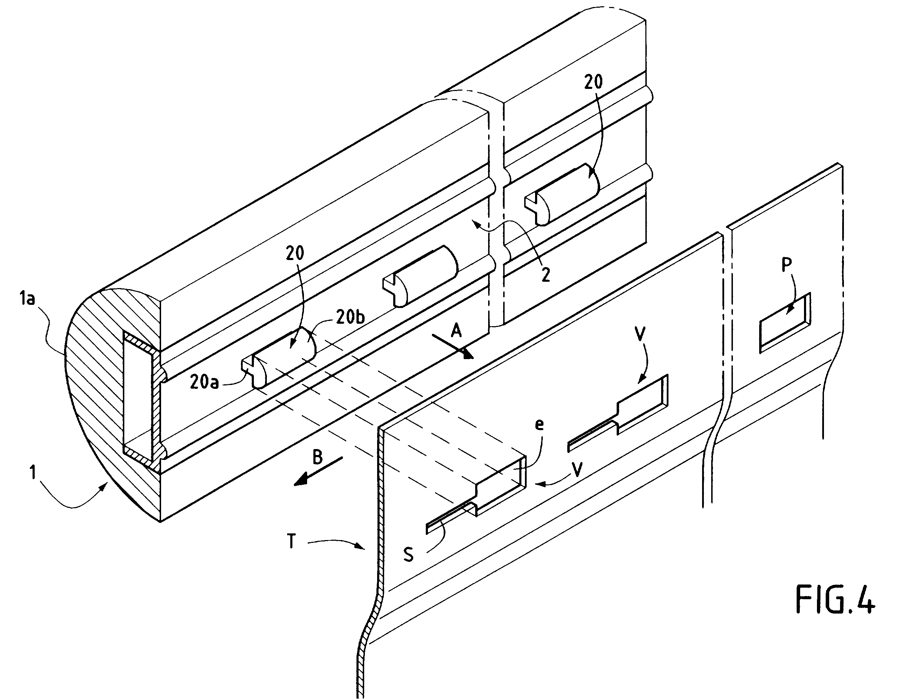

Le dispositif représenté sur les figures est destiné au montage d'un profilé 1 de garniture sur une tôle T de carrosserie (représentée sur les figures 4, 5 et 6).

Le profilé 1 a ici un profil sensiblement hémicylindrique, la face curviligne la étant normalement apparente après montage sur la carrosserie.

La face dorsale lb du profilé 1 est pourvue d'une semelle 2 destinée à venir au contact de la tôle T.

La semelle 2 porte des ergots de retenue 20 destinés à coopérer pendant le montage avec des orifices de verrouillage V ménagés dans la tôle T pour venir se bloquer et se plaquer contre la face interne de la tôle, à l'intérieur de la carrosserie.

La semelle 2 comporte aussi des nervures latérales 21,22 élastiquement déformables et plus particulièrement compressibles, destinées à venir conjointement en compression sur la face externe de la tôle, à l'extérieur de la carrosserie en exerçant à la fois des fonctions de ressort, d'amortisseur et d'étanchéité.

Les ergots de retenue 20 sont constitués d'un pied 20a rattaché à la semelle 2 et se prolongeant par une tête élargie 20b. L'extrémité de la tête élargie 20b a un profil curviligne assurant le guidage de l'ergot 20 dans l'orifice V lors du montage.

La semelle 2 comporte au plus autant d'ergots 20 qu'il y a d'orifices de verrouillage V sur la carrosserie.

Les nervures latérales 21,22 s'étendent, de préférence, sur toute la longueur de la semelle 2 de façon à assurer l'étanchéité de la zone de la carrosserie où sont situés les orifices de verrouillage V.

La rigidité du profilé 1 et de la semelle 2 ainsi que les dimensions des ergots 20 et des nervures 21,22 seront déterminées au préalable en tenant compte notamment de la courbure de la carrosserie dans la zone de pose.

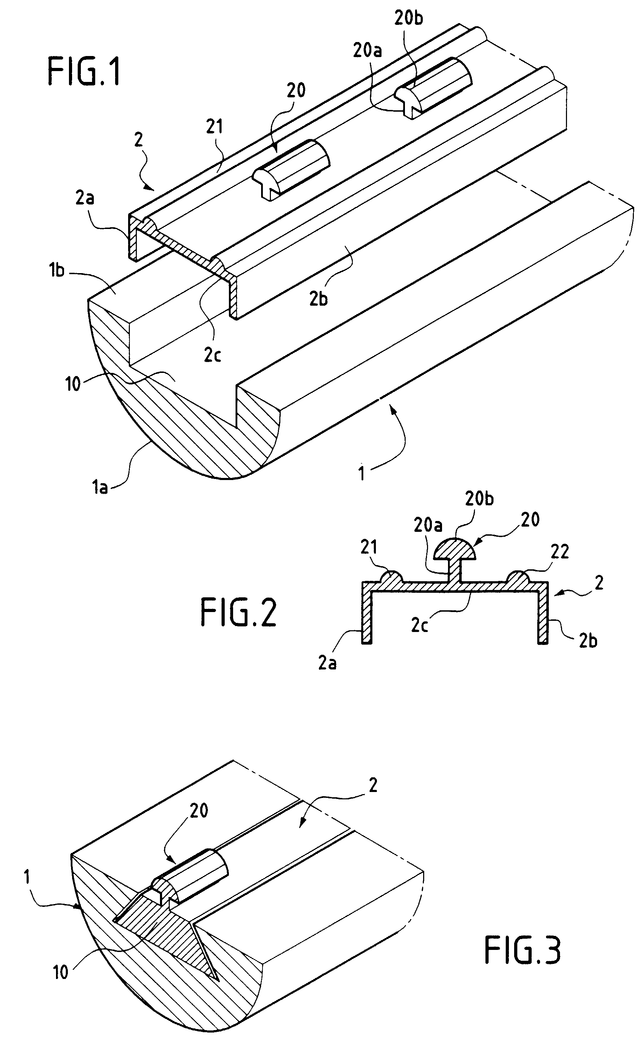

Dans le mode de réalisation représenté sur la figure 1, le profilé 1 et la semelle 2 sont fabriqués de façon indépendante et constituent donc deux pièces séparées destinées à être rendues solidaires l'une de l'autre avant montage sur la carrosserie.

A cet effet, la face dorsale lb du profilé 1 est pourvue d'une gorge longitudinale 10 dans laquelle est fixée la semelle 2 rapportée.

La semelle 2 a une section transversale en U inversé, les deux branches latérales 2a,2b assurant alors l'ancrage dans le profilé 1 en étant (comme représenté sur les figures) fixées sur les parois de la gorge 10, par exemple, par collage, soudure ou toute autre liaison mécanique.

La section en U de la semelle 2 confère à sa partie centrale 2c une faible capacité de déformation élastique qui se combine à l'effet ressort des nervures 21,22 pour faciliter le montage et absorber les vibrations éventuelles.

L'espace interne compris entre la partie centrale 2c de la semelle 2 et le fond de la gorge 10 forme un compartiment tubulaire qui est fermé à ses extrémités longitudinales.

Ce compartiment participe à l'isolation phonique des orifices de verrouillage V.

Bien entendu, il est possible selon une variante (non représentée) de réaliser directement le profilé et la semelle 2 en une seule pièce, par exemple, par coextrusion ou moulage à injection.

Le profilé 1 est réalisé avec une matière thermoplastique dont la dureté est comprise entre 60 et 90 shore A, tandis que la semelle 2 est réalisée, partiellement, avec une matière thermoplastique plus rigide dont la dureté est supérieure à 98 shore A.

Les ergots 20 sont en principe réalisés avec la même dureté que le corps de la semelle.

En revanche, les nervures latérales 21,22 sont plus souples et élastiquement déformables et leur dureté est comprise entre 60 et 75 shore A.

Dans le cas où la semelle 2 est réalisée indépendamment par extrusion ou par coextrusion avec le profilé 1, les ergots 20 sont obtenus par enlèvement partiel de matière à intervalles réguliers à partir d'un profil longitudinal de section uniforme.

Les nervures 21,22 ont, de préférence, une section curviligne permettant d'obtenir par compression, une aire de contact mutuel suffisante avec la face externe de la tôle T.

Dans le mode de réalisation de la figure 3, les parois de la gorge 10 sont inclinées vers le centre et vers l'extérieur pour définir une section trapézoïdale garantissant le maintien de la semelle 2 de profil complémentaire dans la gorge 10.

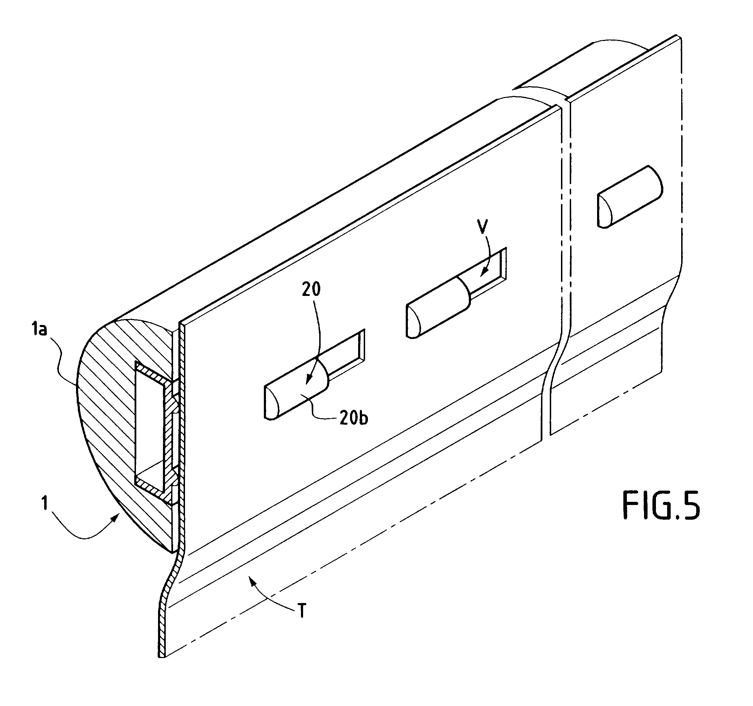

Le montage du profilé 1 au moyen du dispositif de l'invention, s'effectue comme représenté sur les figures 4 et 5.

Une fois que la semelle 2 a été assemblée sur le profilé 1, l'ensemble est approché de la carrosserie dans le sens de la flèche A pour mettre en vis-à-vis les ergots 20 et les orifices V.

Les orifices V sont réalisés, par exemple, par des découpes de la tôle T et sont constitués d'un évidement e dont les contours et les dimensions sont adaptés à ceux de la tête 20b des ergots 20 pour permettre son passage derrière la tôle T. L'évidement e est prolongé longitudinalement par une saignée S traversant la tôle T.

La largeur de la saignée S est déterminée de façon à permettre le coulissement du pied 20a de l'ergot 20 tout en assurant un blocage transversal de la tête élargie 20b.

La longueur de la saignée S correspond sensiblement à la longueur de l'ergot 20. La tôle T est éventuellement pourvue, d'au moins, un orifice supplémentaire P de positionnement dont les contours et les dimensions sont sensiblement égaux à ceux de l'évidement e pour permettre l'introduction et le calage d'un ergot dans cet orifice.

Toutefois, la position de l'orifice P est décalée longitudinalement sur la tôle vers l'orifice V adjacent d'une distance i correspondant à la longueur de l'évidement e.

Le passage de l'ergot s'effectue de façon guidée grâce à la courbure de la tête 20b, en exerçant un léger appui transversal sur la face apparente la du profilé dans le sens de la flèche A comme représenté sur la figure 4.

La phase suivante du montage consiste à déplacer le profilé 1 en translation longitudinale, parallèlement à la tôle T, dans le sens de la flèche B de la figure 4.

Pendant cette phase, il est prévu de maintenir un léger appui sur le profilé 1 en comprimant élastiquement les nervures 21,22 pour écarter la tête 20b et éviter ainsi un frottement trop important contre la face interne de la tôle.

Ce déplacement du profilé 1 s'accompagne du coulissement du pied 20a dans la saignée S et de l'introduction progressive et guidée de l'un des ergots dans l'orifice de positionnement P.

Lorsque le pied 20a vient en butée contre l'extrémité de la saignée S comme représenté sur la figure 5, l'appui transversal peut être relâché et la tête 20b vient alors se plaquer de part et d'autre de la saignée contre la face interne de la tôle sous l'effet ressort des nervures 21,22.

La tête de l'ergot coopérant avec l'orifice de positionnement P se trouve alors calée dans cet orifice, ce qui interdit toute sortie accidentelle des pieds 20b des autres ergots à partir des saignées S.

Le cas échéant, il pourra être avantageux de maintenir, dans la position de montage, une très légère compression longitudinale du profilé 1 en rapprochant l'orifice de positionnement P de l'orifice V de verrouillage adjacent.

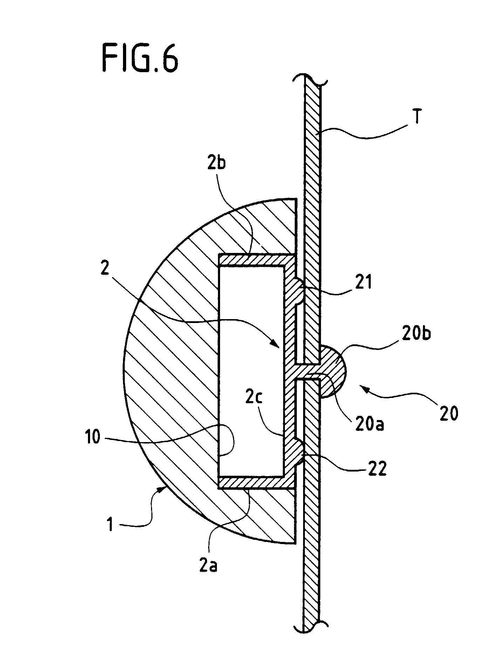

La longueur du pied 20a est déterminée en fonction de l'épaisseur de la tôle pour conserver, en position de montage du profilé 1, une légère compression des nervures 21,22 comme représenté en coupe sur la figure 6, ce qui garantit à la fois l'étanchéité, l'isolation phonique et la bonne tenue mécanique du profilé sur la tôle.

## Revendications

1. Dispositif de montage d'un profilé de garniture (1) sur une tôle (T) de carrosserie, caractérisé en ce que la face dorsale (lb) dudit profilé (1) est pourvue d'une semelle (2) portant des ergots (20) de retenue destinés à coopérer par appui transversal et translation longitudinale avec des orifices (V) de verrouillage ménagés dans la carrosserie pour venir se bloquer contre la face interne de la tôle (T) et des nervures latérales (21,22) élastiquement déformables destinées à venir conjointement en compression sur la face externe de la tôle (T).

2. Dispositif selon la revendication 1, caractérisé en ce que lesdits ergots (20) de retenue sont constitués d'un pied (20a) rattaché à la semelle (2) et se prolongeant par une tête élargie (20b).

3. Dispositif selon la revendication 2, caractérisé en ce que l'extrémité de la tête élargie (20b) a un profil curviligne assurant son guidage dans les orifices (V) de verrouillage lors du montage.

4. Dispositif selon l'une des revendications précédentes, caractérisé en ce que lesdits orifices (V) de verrouillage sont constitués d'un évidement (e) dont les contours et les dimensions permettent le passage d'un ergot (20) et qui se prolonge longitudinalement par une saignée (S) dont les dimensions permettent le coulissement dudit ergot tout en assurant son blocage transversal.

5. Dispositif selon l'une des revendications précédentes, caractérisé en ce que la tôle (T) de carrosserie est pourvue d'au moins un orifice (P) de positionnement dont les contours et les dimensions permettent l'introduction et le calage d'un ergot (20) et dont la position est décalée longitudinalement vers l'orifice (V) de verrouillage adjacent.

6. Dispositif selon l'une des revendications précédentes, caractérisé en ce que le profilé (1) est réalisé avec une matière thermoplastique dont la dureté est comprise entre 60 et 90 shore A.

7. Dispositif selon l'une des revendications précédentes, caractérisé en ce que ladite semelle (2) est réalisée avec une matière thermoplastique partiellement rigide dont la dureté est supérieure à 98 shore A

8. Dispositif selon l'une des revendications précédentes, caractérisé en ce que la dureté desdites nervures (21,22) est comprise entre 60 et 75 shore A.

9. Dispositif selon l'une des revendications précédentes, caractérisé en ce que la semelle (2) et le profilé (1) sont réalisés sous forme de deux pièces indépendantes rendues solidaires l'une de l'autre.

10. Dispositif selon la revendication 9, caractérisé en ce que la face dorsale (lb) du profilé (1) est pourvue d'une gorge longitudinale (10) dans laquelle est fixée ladite semelle (2).

11. Dispositif selon la revendication 10, caractérisé en ce que les parois de ladite gorge (10) sont inclinées pour définir une section trapézoïdale.

12. Dispositif selon l'une des revendications 9 à 11, caractérisé en ce que la semelle (2) a une section transversale en U inversé; les deux branches latérales (2a,2b) assurant l'ancrage dans ledit profilé (1).

13. Dispositif selon l'une des revendications précédentes, caractérisé en ce que la semelle (2) et le profilé (1) sont réalisés d'une seule pièce par coextrusion ou moulage.
